# EUROPEAN PATENT SPECIFICATION

(11) **EP 1 718 454 B1**
(45) Date of publication and mention of the grant of the patent: **25.05.2016**
(21) Application number: 04745245.3
(22) Date of filing: 09.08.2004
(51) Int. Cl.: B29C 70/44, B29C 70/86, C04B 41/48

(54) **VACUUM RESIN PROCESS USING DRAINING LAYER FOR MARBLE BLOCKS**
EINE DRAINAGESCHICHT VERWENDENDES VAKUUMHARZVERFAHREN FÜR MARMORBLÖCKE
PROCEDE DE RESINE SOUS VIDE METTANT EN OEUVRE UNE COUCHE DE DRAINAGE ET DESTINE A DES BLOCS DE MARBRE

(30) Priority: 13.02.2004 IT PI20040007
(43) Date of publication of application: 08.11.2006
(73) Proprietor: Campagnola, Mathias, 37024 Negrar (VR) (IT); Fedeli, Denis, 37024 Negrar (VR) (IT); Bonelli, Walter, 54033 Carrara (IT)
(72) Inventor: MAINOLDI, Enrico, I-19033 Castelnuovo Magra (SP) (IT)
(74) Representative: Gervasi, Gemma
(86) International application number: PCT/IT2004/000456
(87) International publication number: WO 2005/077645

(56) References cited:
- EP-A- 0 962 430
- EP-A- 1 170 271
- EP-A- 1 296 910
- US-A- 3 111 569
- US-A- 4 013 809
- US-A- 4 132 755
- US-B1- 6 682 691

## Description

### Technical field

The present invention concerns resin processes for marble blocks as per the preamble of claim 1. Such a process is known from EP 1 296 910.

### Background art

Since the availability of marble blocks, of first quality is more and more decreasing, resin processes with epoxy resin are often needed to recover marble blocks with imperfections, during cut into slabs in suitable cutting frames, in order to prevent the slabs from breaking.

The current technology of marble industry carries out the resin process of marble blocks by enclosing them within suitable wooden cases, which are always tailor-made, then pouring the resin into the case, in order to completely cover the block, and finally sawing case and bock together after that the resin is completely hardened.

This technology involves high costs of wood, for the construction of the case, and of resin, because it must fill all the spaces created between the regular shape of the wooden case and the irregular shape of the marble block. It is also very expensive for the labour, as every time it's necessary to build a new tailor-made wooden box.

EP1296910 discloses a process for repairing and consolidating a parallelepiped stone block by applying a sheath around said block that is higher than the block and is spaced from the block by means of suitable spacers or fabric material. The sheath has its upper side open and is filled with resin. The block with the sheath is put in an autoclave and filled with resin under vacuum, and the sheath is pressed outside by an external formwork. This process is very expensive, because it requires an autoclave and a framework made around the sheath. Moreover, a high amount of resin is required.

US4013809 discloses a process whereby the block is dipped by applying a bag around the block that is higher than the block. The bag has its upper side open and is filled with resin. The block with the sheath is dipped in an autoclave that is filled with liquid which presses the bag outside, and keeps the bag adherent to the block. Also this process is expensive, because it requires an autoclave that can be filled with liquid. Also in this case, a high amount of resin is required.

### Summary of the invention

The present invention aims at eliminating the above-mentioned and other drawbacks, supplying a vacuum resin process for marble blocks using a draining layer and a bag of flexible plastic material around it, as hereinafter better disclosed.

The advantages resulting from the present invention essentially consist of the fact that it's possible to apply resin around marble blocks and to reduce both material costs and labour costs. In particular, the resin perfectly adheres to the shape of the marble block and there are not hardened resin external portions. The process is easy to carry out on industrial scale and is not expensive, and the resin coating is of best quality.

The system object of this invention permits to carry out a resin process on a marble block of any shape in a simple and perfect way, as the resin perfectly adheres to the surfaces of the block without any waste of material.

Reduced to its essential structure and with reference to the figures of the enclosed drawings, a resin process for marble blocks, according to the present invention, comprises at least the following phases:
- covering the marble block with a draining layer at least along its side surfaces, said draining layer adapted to let resin flow, at the same time reinforcing the block;
- inserting the block into a bag of a vacuum tight material;
- closing the bag and connecting to the bag an apparatus for creating vacuum within the same block containing bag ;
- injecting resin into the bag by means of an adapter that is associated to the bag;
- maintaining vacuum condition within the bag up to a complete hardening of the resin;
- disconnecting the bag from the vacuum apparatus and extracting the resin finished block.

Conveniently, the draining layer is a net.

Conveniently, the block is firstly covered by the draining layer and later by a fabric layer, which allows the block to be more resistant and compact.

The draining net and the fabric layer cover all the surfaces of the block, both side, lower and upper surfaces. In particular, a first layer of draining net and fabric is laid onto the base, then the marble is placed over it, so that all the other facing surfaces can be covered.

Both the draining net and the fabric layer are preferably made of glass fibre.

Advantageously, the draining net is applied overlapping a layer of square mesh net with one of rhomboidal mesh net, so as to create constant gaps.

The net has three purposes: to create a gap that facilitates the rise and spread of the resin; to regulate the width of the resin according to the number and the thickness of its layers; to aid the structural resistance of the resin process.

The cover of the block with glass fibre fabric has two purposes: to protect the vacuum tight plastic bag from accidental holes ; to give a good mechanical resistance to the polymerisation resin process. The employ of the glass fibre (or similar fibre) fabric makes the resin process very resistant and permits a greater mechanical resistance with minor resin consumption.

Both the draining net and the fabric layer can be one or more, according to the kind of resin process.

The covered block is inserted into a plastic bag in order to obtain the vacuum. The vacuum causes the bag to perfectly adhere to all the irregularities of the surface of the marble block, in order to require a minimum quantity of resin to cover all the surface of the marble block. It completely eliminates any presence of water, even in the smallest pores of the marble, ensuring a high penetration of the resin. Thanks to the vacuum, all the gaps previously filled with air in the cavities and pores of the marble, the draining layer and the external glass fibre fabric, are filled with resin, so that, after hardening, the marble block results perfectly cohesive.

The draining layer, under vacuum, has the basic task to permit the rise of the resin from the base to the top of the block and its complete spread over al the surface of the block, as well as to permit to regulate and distribute the desired width of resin, increasing or decreasing it according to the number of overlapped layers of net, and finally it aids to augment the structural resistance of the resin.

Advantageously, the draining layer is made of two or more alternated glass fibre square and rhomboidal mesh nets of suitable thickness, providing possibly a further covering with glass fibre fabric, in order to increase its mechanical resistance.

In the resin process at issue, the marble block is covered by a draining layer for the resin, which can be made of one or more layers of glass fibre (or similar) draining net of suitable thickness.

In a preferred embodiment, the draining layer is covered and reinforced by one or more layers of glass fibre (or similar) fabric and placed in the bag of flexible plastic material, which is sealed at the top and to which a suction pipe is fixed and connected to an apparatus for the vacuum, while at the base a pipe for the injection of the resin is fixed. Subsequently, the vacuum pump is activated, causing the bag, the draining layer and the glass fibre fabric to perfectly adhere to the irregular surface of the marble block. Then, the block is left in vacuum condition for a time necessary to let the moisture evaporate, so reaching the best vacuum degree. Later, the injection starts of the resin that, rising from the base to the top of the block, through the gaps of the draining layer between the block and the glass fibre fabric, fills all the gaps of the cavities and pores of the marble block and the glass fibre until it creates a uniform layer around the block. After the dryness of the resin, a marble block perfectly cohesive with the hardened resin and the cover of net and glass fibre fabric.

### Brief description of drawings

The characteristics of the present invention can be better understood by every expert in this field, referring to the enclosed drawings:

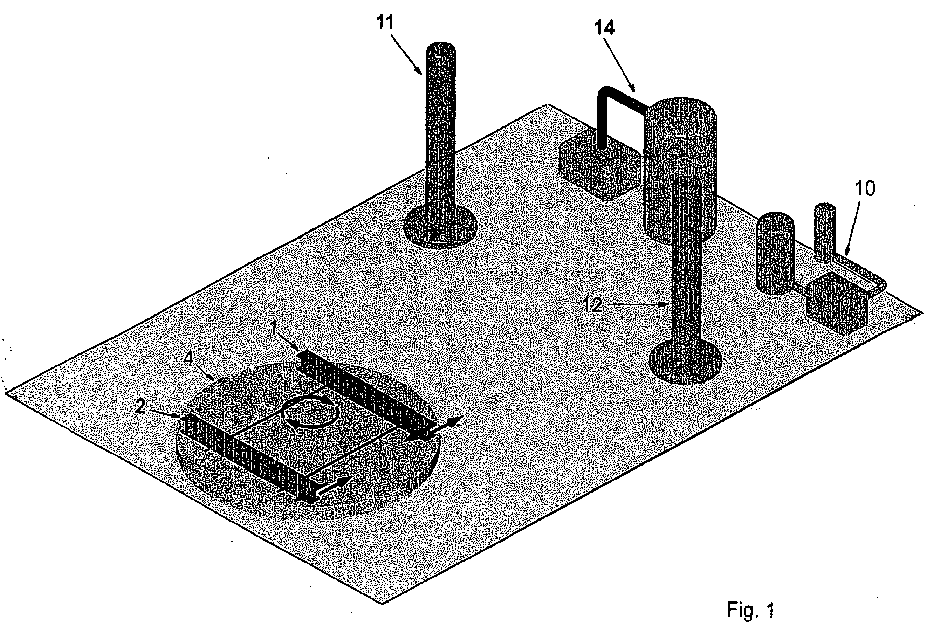

- Fig. 1 shows the elements forming this system: the adjustable supports (1,2) for the marble block, the rotating base (4), a net coil (11), a glass fibre coil (12), the apparatus for the mixing and injection of the hardener resin (10), the vacuum apparatus (14).

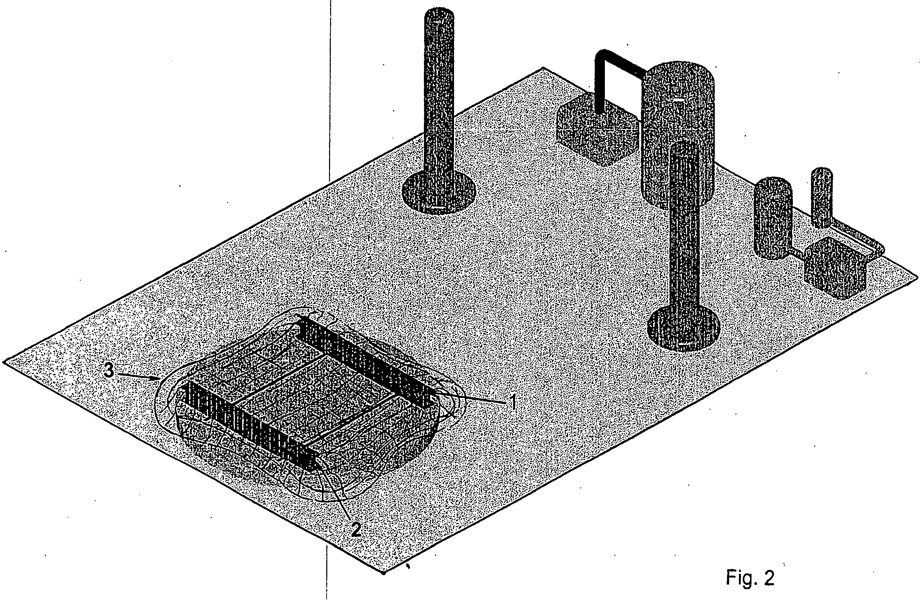

- Fig. 2 shows the same elements, and also the bag (3) fixed over the supports (1,2).

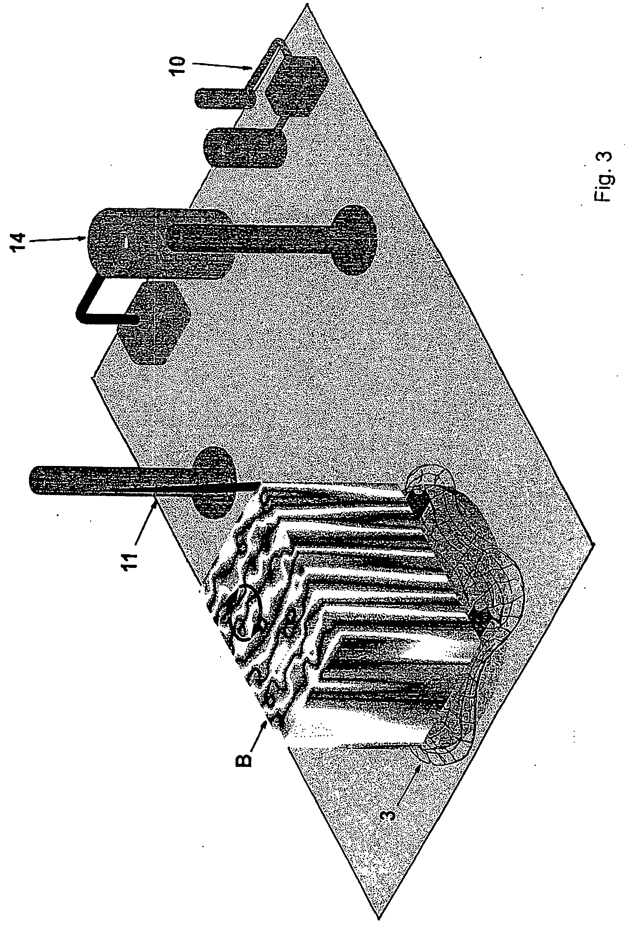

- Fig. 3 shows the marble block (B) placed over the bag (3).

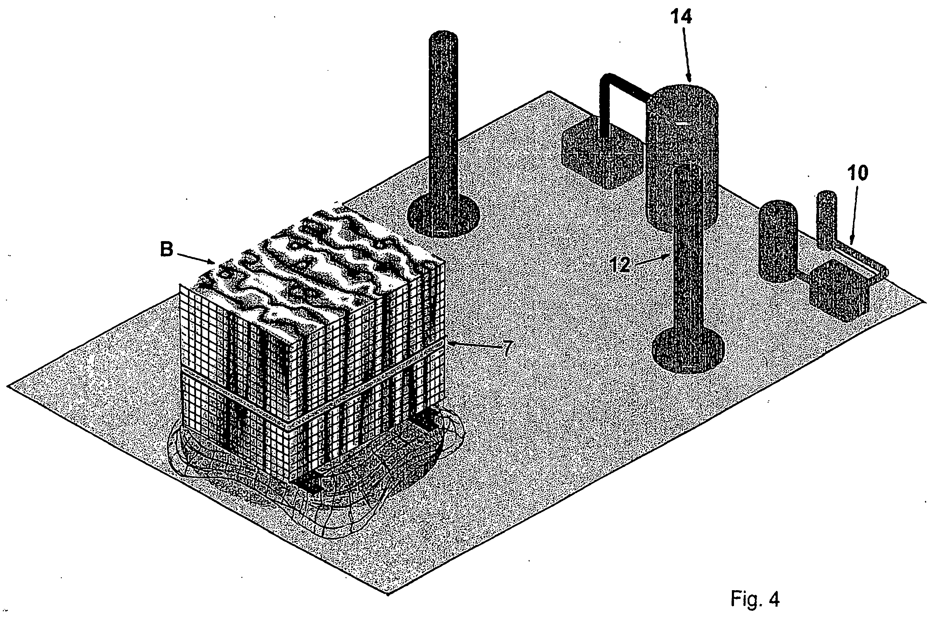

- Fig. 4 shows the marble block (B) first covered by the draining net, one layer on the top and two or more on the sides, and later covered by the holed pipe for the injection of the resin (7).

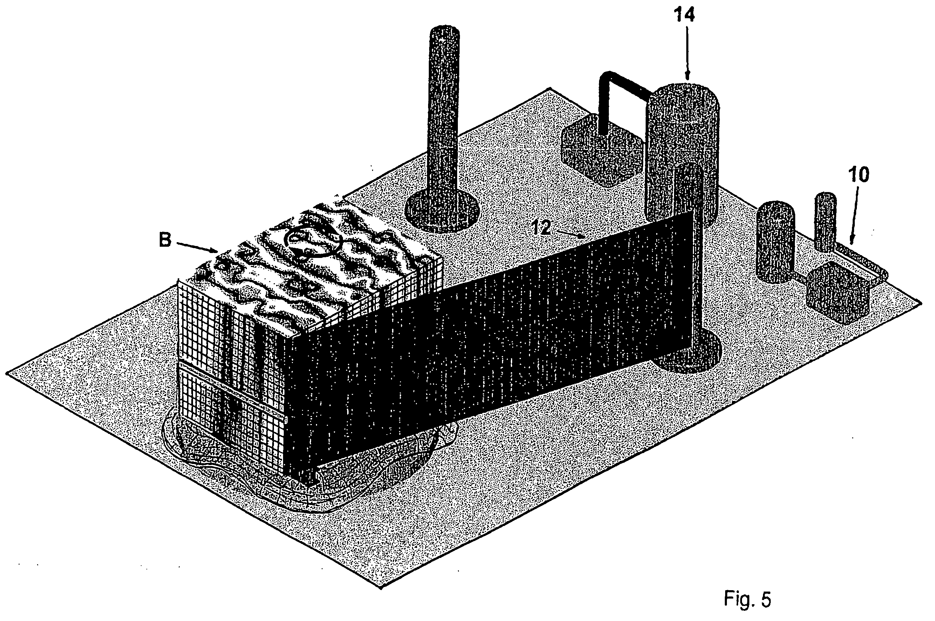

- Fig. 5 shows the marble block (B) covered by glass fibre fabric, thanks to its rotation and by the unwinding of the glass fibre coil (12) :

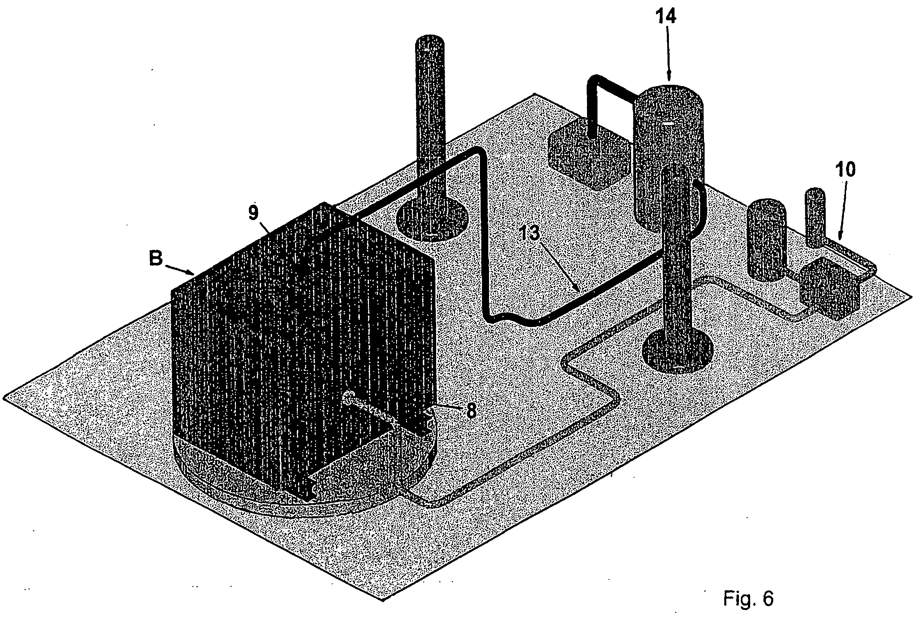

- Fig. 6, finally, shows the connection of the suction pipe (13) of the vacuum apparatus (14) to the suitable airtight adapter (9) located at the top of the bag and the connection of the pipe of the apparatus for the mixing and injection of the hardener resin (10) to the suitable airtight adapter (8) located in the lower portion of the bag.

With reference to the drawings, an apparatus for carrying out the resin process comprises at least the following elements:
- a rotating base (4), equipped with two tracks inside which two supports (1, 2) for the marble block slide, moving towards or away from each other, that are adjusted according to the size of the block;
- a coil of draining net or other draining material ;
- a coil of fabric (12);
- an apparatus for mixing and injecting the resin (10)
- a vacuum apparatus (14).

Referring to said apparatus, in a practical solution, the process comprises the following steps:
- adjusting the wheel base of the supports (1, 2), according to the size of the marble block (B) to finish with resin;
- fixing the bag (3) to said supports (1, 2);
- laying at the base of the bag one or more layers of glass fibre fabric that are slightly larger than the base of the marble block;
- placing the block (B) onto the supports (1, 2) inside the open bag;
- covering the upper and side surfaces of the block by a glass fibre draining net, by rotation of the base (4) of the block and unwinding the net from the net coil (11);
- applying to the net a holed pipe (7) for the injection of the resin in such a way that the resin can be injected from the base of the marble block along the entire perimeter of its side surfaces up to such a level that permits a complete rise of the resin, according to the height of the block and the fluidity of the resin employed ;
- completely covering the block by glass fibre fabric, by rotation of the base (4) of the block and unwinding the glass fibre fabric from the fabric coil;
- connecting the suction pipe (13) of a vacuum apparatus (14) to a suitable airtight adapter (9) located at the top of the bag, the suction pipe located on the upper surface of the marble block, so that, during the suction, it is not covered by the bag;
   connecting the pipe of the apparatus for the mixing and injecting the hardener resin (10) to a suitable airtight adapter (8) that is located in the lower portion of the bag;
- closing the upper opening of the bag by welding or other method in order to ensure a vacuum tight condition;
- activating the vacuum apparatus (14) up to reaching a desired vacuum degree;
   injecting the resin by the apparatus for the mixing of the resin (10) until the top of the block is reached;
   maintaining the vacuum condition until a total hardening of the resin;
- once the resin has become hardened, disconnecting the vacuum apparatus,
   and opening the bag with successive extraction of the resin-finished block.

Conveniently, the bag is equipped both inside and outside with reinforcements made of Velcro or other similar material for protecting the supports (1,2).

Conveniently, the injection of the resin must be realized without any vacuum escape inside the bag.

## Claims

1. Resin process for marble blocks (B), comprising the step of:
- covering a marble block (B) with a draining layer at least along its side surfaces, said draining layer adapted to let resin (10) flow, at the same time reinforcing the block (B);
**characterized in that** it comprises at least the following steps :
- inserting the block (B) into a bag (3) of a vacuum tight material;
- closing the bag (3) and connecting to the bag (3) an apparatus (14) for creating vacuum within the bag (3), which contains the block (B);
- injecting resin (10) into the bag (3) by means of an adapter (8) that is associated to the bag (3);
- maintaining vacuum, condition up to a complete hardening of the resin (10);
- disconnecting the bag (3) from the vacuum apparatus (14) and extracting the resin (10) finished block (B).

2. Process as claimed in claim 1, wherein said injecting step is carried out in a vacuum condition inside the bag (3), starting from the base of the marble block (B) along the entire perimeter of its side surfaces up to such a level that permits the complete rise of the resin (10) until the top of the block (B) is reached, with maintenance of the vacuum condition up to a total hardening of the resin (10).

3. Process as claimed in claim 1, **characterized in that** the draining layer is made of a net.

4. Process as claimed in claim 3, **characterized in that**, the net is applied overlapping a layer of square mesh net with one of rhomboidal mesh net, so as to create constant gaps.

5. Process as claimed in claim 1, **characterized in that** the block (B) is firstly covered by the draining layer and later by a fabric layer, which allows the block (B) to be more resistant and compact, protecting the bag (3) that containins the block (B) from accidental holes.

6. Process as claimed in claim 1, **characterized in that** both the draining net and the fabric are made of glass fibre.

7. Process as claimed in claim 1, **characterized in that** the bag (3) is equipped with an adapter (9) in a point of its surface, to which a pipe of a vacuum apparatus (14) is connected, so that, through it, a vacuum condition is achieved inside the bag (3).

8. Process as claimed in claim 1, **characterized in that**, in order to insert the resin (10) into the bag (3), upon achieving vacuum in the bag (3), the bag (3) is equipped with an adapter (8) in a point of its surface, to which a pipe of a resin apparatus is connected, so that, through it, the resin (10) is inserted into the bag (3).

9. A process as claimed in claim 1, wherein the thickness of the resin (10) hardened around the block (B) is determined by the number and the thickness of the layers of said draining material.

## Patentansprüche

1. Harzverfahren für Marmorblöcke (B), wobei das Verfahren den folgenden Schritt umfasst:
- Bedecken eines Marmorblocks (B) mit einer Trockenlegeschicht wenigstens entlang seiner Seitenflächen, wobei die genannte Trockenlegeschicht dafür ausgelegt ist, Harz (10) fließen zu lassen und gleichzeitig den Block (B) zu verstärken;
**dadurch gekennzeichnet, dass** das Verfahren wenigstens die folgenden Schritte umfasst:
- Einfügen des Blocks (B) in einen Beutel (3) aus einem vakuumdichten Material;
- Schließen des Beutels (3) und Verbinden einer Vorrichtung (14) mit dem Beutel (3), um in dem Beutel (3), der den Block (B) enthält, einen Unterdruck zu erzeugen;
- Einspritzen von Harz (10) in den Beutel (3) mittels eines Adapters (8), der dem Beutel (3) zugeordnet ist;
- Aufrechterhalten des Unterdruckzustands bis zum vollständigen Erhärten des Harzes (10);
- Trennen des Beutels (3) von der Unterdruckvorrichtung (14) und Entnehmen des Blocks (B) mit einer mit Harz (10) versehenen Oberfläche.

2. Verfahren gemäß Anspruch 1, wobei der genannte Schritt des Einspritzens in einem Unterdruckzustand innerhalb des Beutels (3), beginnend von der Unterseite des Marmorblocks (B) entlang des gesamten Umfangs seiner Seitenflächen bis auf eine Höhe, die den vollständigen Anstieg des Harzes (10), bis die Oberseite des Blocks (B) erreicht ist, zulässt, unter Aufrechterhaltung des Unterdruckzustands bis zum vollständigen Erhärten des Harzes (10) ausgeführt wird.

3. Verfahren gemäß Anspruch 1, **dadurch gekennzeichnet, dass** die Trockenlegeschicht aus einem Netz hergestellt ist.

4. Verfahren gemäß Anspruch 3, **dadurch gekennzeichnet, dass** das Netz angewendet wird, wobei es eine Schicht eines quadratischen Maschennetzes mit einer eines rautenförmigen Maschennetzes überlappt, um konstante Zwischenräume zu erzeugen.

5. Verfahren gemäß Anspruch 1, **dadurch gekennzeichnet, dass** der Block (B) zunächst durch die Trockenlegeschicht und später durch eine Stoffschicht, die ermöglicht, dass der Block (B) widerstandsfähiger und kompakter wird, wobei sie den Beutel (3), der den Block (B) enthält, vor unbeabsichtigten Löchern schützt, bedeckt wird.

6. Verfahren gemäß Anspruch 1, **dadurch gekennzeichnet, dass** sowohl das Trockenlegenetz als auch der Stoff aus Glasfaser hergestellt sind.

7. Verfahren gemäß Anspruch 1, **dadurch gekennzeichnet, dass** der Beutel (3) an einem Punkt seiner Oberfläche mit einem Adapter (9) versehen ist, mit dem ein Rohr einer Vakuumvorrichtung (14) in der Weise verbunden wird, dass durch es in dem Beutel (3) ein Unterdruckzustand erreicht wird.

8. Verfahren gemäß Anspruch 1, **dadurch gekennzeichnet, dass** der Beutel (3) an einem Punkt seiner Oberfläche mit einem Adapter (8) versehen ist, mit dem ein Rohr einer Harzvorrichtung in der Weise verbunden wird, dass durch es das Harz (10) in den Beutel (3) eingeleitet wird, um beim Erreichen des Unterdrucks in dem Beutel (3) das Harz (10) in den Beutel (3) einzuleiten.

9. Verfahren gemäß Anspruch 1, wobei die Dicke des um den Block (B) gehärteten Harzes (10) durch die Anzahl und durch die Dicke der Schichten des genannten Trocknungsmaterials bestimmt wird.

## Revendications

1. Procédé de résine pour des blocs en marbre (B), comprenant l'étape de
- couvrir un bloc de marbre (B) au moins le long de ses faces latérales, d'une couche de drainage, la couche de drainage étant adaptée pour laisser couler de la résine (10) qui en même temps, renforce le bloc (B),
**caractérisé en ce qu'**il comprend au moins les étapes suivantes :
- insérer le bloc (B) dans un sac (3) en un matériau étanche au vide,
- fermer le sac (3) et connecter au sac (3) un appareil (14) pour créer un vide dans le sac (3) qui contient le bloc (B),
- injecter de la résine (10) dans le sac (3) à l'aide d'un adaptateur (8) qui est associé au sac (3),
- maintenir les conditions de vide jusqu'à un durcissement complet de la résine (10),
- déconnecter le sac (3) de l'appareil de vide (14) et sortir le bloc (B) avec finition de résine (10).

2. Procédé selon la revendication 1, **caractérisé en ce que** l'étape d'injection est effectuée sous des conditions de vide à l'intérieur du sac (3), en commençant à la base du bloc de marbre (B) le long du périmètre entier de ses surfaces latérales jusqu'à un tel niveau qui permet la montée complète de la résine (10) jusqu'à ce que le sommet du bloc (B) soit atteint, avec maintien des conditions de vide jusqu'à un durcissement complet de la résine (10).

3. Procédé selon la revendication 1, **caractérisé en ce que** la couche de drainage est faite en un filet.

4. Procédé selon la revendication 3, **caractérisé en ce que** le filet est mis en place en faisant chevaucher une couche de filet à mailles carrées avec une couche de filet à mailles rhomboïdales, afin de créer des interstices constants.

5. Procédé selon la revendication 1, **caractérisé en ce que** le bloc (B) est d'abord recouvert par la couche de drainage et ensuite par une couche en tissu ce qui permet au bloc (B) d'être plus résistant et compact, protégeant ainsi le sac (3) qui contient le bloc (B), de trous accidentels.

6. Procédé selon la revendication 1, **caractérisé en ce qu'**aussi bien le filet de drainage que le tissu sont faits en fibres de verre.

7. Procédé selon la revendication 1, **caractérisé en ce que** le sac (3) est équipé d'un adaptateur (9) à un point de sa surface auquel un tuyau d'un appareil de vide (14) est connecté, si bien que, à travers celui-ci, les conditions de vide sont réalisées à l'intérieur du sac (3).

8. Procédé selon la revendication 1, **caractérisé en ce que**, afin d'introduire la résine (10) dans le sac (3) après avoir établi le vide dans le sac (3), le sac (3) est équipé d'un adaptateur (8) à un point de sa surface auquel un tuyau d'un appareil de résine est connecté, si bien que, à travers celui-ci, la résine est introduite à l'intérieur du sac (3).

9. Procédé selon la revendication 1, **caractérisé en ce que** l'épaisseur de la résine (10) durcie autour du bloc (B) est déterminée par le nombre et l'épaisseur des couches dudit matériau de drainage.
